# FASCICULE DE BREVET EUROPEEN

(11) **EP 4 372 300 B1**
(45) Date de publication et mention de la délivrance du brevet: **09.04.2025**
(21) Numéro de dépôt: 23209661.0
(22) Date de dépôt: 14.11.2023
(51) Int. Cl.: F25J 3/02

(54) **PROCÉDÉ ET APPAREIL DE DISTILLATION CRYOGÉNIQUE POUR PRODUCTION DE CO2 LIQUIDE**
KRYOGENES DESTILLATIONSVERFAHREN UND VORRICHTUNG ZUR HERSTELLUNG VON FLÜSSIGEM CO2
CRYOGENIC DISTILLATION METHOD AND APPARATUS FOR PRODUCTION OF LIQUID CO2

(30) Priorité: 16.11.2022 FR 2211897
(43) Date de publication de la demande: 22.05.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: VALENTIN, Solène, 38360 SASSENAGE (FR); FRAYSSE, Philippe, 38360 SASSENAGE (FR); ZICK, Golo, 38360 SASSENAGE (FR); MAKHLOUCHE, Rachid, 38360 SASSENAGE (FR)
(74) Mandataire: Air Liquide

(56) Documents cités:
- WO-A2-2007/138067
- CN-A- 115 069 057
- DE-A1- 3 639 779
- GB-A- 2 102 931
- YOUSEF AHMED M. ET AL: "Upgrading biogas to biomethane and liquid CO2: A novel cryogenic process", FUEL, vol. 251, 1 September 2019 (2019-09-01), GB, pages 611 - 628, XP055877170, ISSN: 0016-2361, DOI: 10.1016/j.fuel.2019.03.127

## Description

La présente invention est relative à un procédé et à un appareil de distillation cryogénique pour production de CO2 liquide.

Elle concerne en particulier un procédé de séparation d'un mélange contenant au moins 87 % mol de CO2 et entre 5 et 11 % de méthane et éventuellement d'autres impuretés plus légères que le CO2 telles que l'oxygène et l'azote.

Cette composition correspond typiquement à un courant issu d'une unité d'épuration du biogaz.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, et dont les conditions sont contrôlées, appelé méthaniseur ou digesteur, puis dans un post-digesteur, similaire au digesteur et permettant de pousser plus loin la réaction de méthanisation.

On appellera biomasse tout groupement de matières organiques pouvant se transformer en énergie à travers ce processus de méthanisation par exemple : boues de station d'épuration, fumiers/lisiers, résidus agricoles, déchets alimentaires...

Le digesteur, c'est-à-dire le réacteur dédié à la méthanisation de la biomasse, est une cuve fermée, chauffée ou non (opération à une température fixée, entre la température ambiante et 55°C) et dont le contenu constitué de la biomasse est brassé, en continu ou séquentiel. Les conditions dans le digesteur sont anaérobies et le biogaz généré se retrouve dans l'espace de tête du digesteur (ciel gazeux), où il est prélevé. Les post-digesteurs sont similaires aux digesteurs.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention et du substrat mais peut également contenir, en moindres proportions de l'eau, de l'azote, de l'hydrogène sulfuré (H2S), de l'oxygène, ainsi que des composés organiques autres, à l'état de traces, dont le H2S, entre 10 et 50,000 ppmv.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au cœur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (bioGNL)...

D'autre part, le biogaz est également constitué en grande partie de dioxyde de carbone qui peut être valorisé comme un produit pour des marchés diverses et variés tels que les boissons gazéifiées, les serres et le nettoyage. Ce dioxyde de carbone a besoin d'être liquéfié pour être transporté vers son utilisation. Cette liquéfaction permet également d'atteindre la qualité du gaz requise.

### Problème à résoudre:

L'épuration du biogaz en biométhane demande plusieurs étapes. Une première étape consiste à comprimer le biogaz qui a été produit et acheminé à pression atmosphérique, cette compression peut être obtenue - de façon classique - via un compresseur à vis lubrifiée. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur. Des technologies variées sont utilisées pour cela en fonction des situations ; parmi celles-ci, la technologie membranaire est particulièrement performante lorsque la teneur en CO2 est élevée ; elle est donc utilisée pour séparer le CO2 présent dans le biogaz, provenant des décharges ou des digesteurs de déchets végétaux ou animaux.

Tandis que le procédé d'épuration du biogaz en biométhane permet au biométhane d'atteindre la qualité requise, les évents contiennent les différents gaz entrant dans l'unité d'épuration en proportions variées en fonction de la technologie de séparation du dioxyde de carbone / azote / oxygène du méthane utilisée. Pour également valoriser le dioxyde de carbone, il est nécessaire de séparer le dioxyde de carbone du reste des composés gazeux des évents. Une unité de liquéfaction du CO2 permet de séparer le dioxyde de carbone du reste des composés gazeux méthane / azote / oxygène. Le procédé utilisé est une distillation cryogénique produisant du dioxyde de carbone liquide au bouilleur et un gaz contenant le reste des composés gazeux en tête de colonne. Ce reste des composés gazeux étant chargés en méthane est recyclé vers le procédé d'épuration du biogaz

Pour que le dioxyde de carbone soit valorisé sur des marchés très contraignants tels que l'industrie alimentaire, la pureté du CO2 doit être assurée et le procédé pour l'obtenir être contrôlé.

Il est connu de US4639257 de produire du CO2 liquide par distillation cryogénique d'un mélange gazeux. Le mélange gazeux est refroidi avant introduction dans la colonne de distillation qui contient des moyens de mise en contact afin d'assurer un bon contact entre le flux de liquide descendant et le flux gazeux ascendant. Le fond de colonne est bouilli par le débit d'alimentation (apport d'énergie chaude) pour enlever toutes traces des composés différents du CO2 tandis que la tête de colonne est refroidie (apport d'énergie froide) par un cycle de réfrigération qui passe dans la colonne, pour avoir le meilleur rendement de récupération du CO2. Le document DE3639779A1 divulgue un procédé de séparation d'un gaz d'alimentation contenant au moins 87 %mMmol CO2 et entre 5 et 11 % mol de méthane pour produire du CO2 liquide épuré en méthane par distillation dans une colonne dans lequel
i. un débit gazeux du gaz d'alimentation à une pression entre 6 barg et 25 barg est envoyé réchauffer le liquide de cuve de la colonne de distillation par échange de chaleur indirect dans un bouilleur, le liquide de cuve étant vaporisé dans le bouilleur et envoyé en cuve de la colonne et le débit gazeux étant refroidi tout en restant gazeux
ii. le débit gazeux refroidi est refroidi jusqu'à une température égale ou inférieure à -35°C au moyen d'un condenseur distinct de la colonne de distillation et refroidi au moyen d'un cycle fermé de réfrigération afin de condenser partiellement le mélange gazeux formant un gaz enrichi en méthane et appauvri en C02 par rapport au mélange envoyé au condenseur et un liquide enrichi en CO2 et appauvri en méthane par rapport au mélange envoyé au condenseur
iii. le liquide enrichi en CO2 est envoyé en tête de la colonne pour constituer un liquide de reflux et
iv. un liquide contenant au moins 99 % mol de CO2 est soutiré en cuve de la colonne comme produit final.

L'obtention de la bonne qualité du CO2 en fond de colonne est possible par le contrôle du contenu en autres gaz. Il est donc nécessaire d'analyser la phase gazeuse et la phase liquide à différents niveaux dans la colonne, selon l'art antérieur. La présente invention permet de se passer de cette analyse.

Selon un objet de l'invention, il est prévu un procédé de séparation d'un gaz d'alimentation contenant au moins 87 % mol CO2 et entre 5 et 11 % mol de méthane pour produire du CO2 liquide épuré en méthane par distillation dans une colonne dans lequel
i. un débit gazeux du gaz d'alimentation à une pression entre 6 barg et 25 barg est envoyé réchauffer le liquide de cuve de la colonne de distillation par échange de chaleur indirect dans un bouilleur, le liquide de cuve étant vaporisé dans le bouilleur et envoyé en cuve de la colonne et le débit gazeux étant refroidi tout en restant gazeux
ii. le débit gazeux refroidi est mélangé avec un gaz de tête provenant de la tête de la colonne pour former un mélange gazeux et le mélange gazeux est refroidi jusqu'à une température égale ou inférieure à -35°C au moyen d'un condenseur distinct de la colonne de distillation et refroidi au moyen d'un cycle fermé de réfrigération afin de condenser partiellement le mélange gazeux formant un gaz enrichi en méthane et appauvri en CO2 par rapport au mélange envoyé au condenseur et un liquide enrichi en CO2 et appauvri en méthane par rapport au mélange envoyé au condenseur
iii. le liquide enrichi en CO2 est envoyé en tête de la colonne pour constituer un liquide de reflux et
iv. un liquide contenant au moins 99 % mol, de préférence au moins 99,5 %, voire au moins 99,7 % de CO2 est soutiré en cuve de la colonne comme produit final, de préférence ce liquide contenant moins que 50ppm de méthane.

Selon d'autres aspects facultatifs :
- la colonne opère à une pression entre 14 et 16 barg.
- le réfrigérant du cycle fermé est du CO2 à pression supercritique ou du CO2 liquide.
- le mélange gazeux est refroidi jusqu'à une température entre -44°C et -46°C au moyen du condenseur.
- le débit gazeux du gaz d'alimentation est à une température supérieure de 2°C par rapport à la température du fond de colonne.
- le mélange gazeux est refroidi dans le condenseur jusqu'à une température de préférence inférieure d'au moins 4°C à la température de tête de colonne.
- le bouilleur est directement intégré en cuve de la colonne.
- le gaz d'alimentation est comprimé à la pression requise pour la liquéfaction du CO2 et non sa solidification, supérieure à 6 barg et préférentiellement à 15 barg.
- le gaz d'alimentation comprimé est séché par condensation de l'eau résiduelle.
- le gaz d'alimentation est purifié afin de retirer les impuretés en faible quantité tels que l'hydrogène sulfuré et/ou au moins un composé organique volatil et/ou une vapeur d'huile.
- le gaz d'alimentation purifié est séché à un point de rosée d'éventuellement - 50°C grâce à un procédé d'adsorption de l'eau cyclique.

Selon un autre objet de l'invention, il est prévu un procédé de séparation de biogaz comprenant une étape d'épuration du biogaz pour séparer du méthane du biogaz en produisant un gaz d'alimentation contenant au moins 87 % mol CO2 et entre 5 et 11 % mol de méthane et dans lequel le gaz d'alimentation est séparé tel que décrit ci-dessus

Le gaz enrichi en méthane peut être recyclé à l'étape d'épuration du biogaz pour séparer le méthane qu'il contient.

Selon un autre objet de l'invention, il est prévu un appareil de séparation d'un mélange contenant au moins 87 % mol CO2 et entre 5 et 11 % mol de méthane pour produire du CO2 liquide épuré en méthane par distillation comprenant une colonne de distillation ayant un bouilleur de cuve, un condenseur distinct de la colonne de distillation, des moyens pour envoyer un débit gazeux du mélange à une pression entre 6 barg et 25 barg est envoyé réchauffer le liquide de cuve de la colonne de distillation par échange de chaleur indirect dans le bouilleur, le liquide de cuve étant vaporisé dans le bouilleur et envoyé en cuve de la colonne et le débit gazeux étant refroidi tout en restant gazeux, des moyens pour mélanger le débit gazeux refroidi avec un gaz de tête provenant de la tête de la colonne pour former un mélange gazeux, des moyens pour envoyer le mélange gazeux au condenser pour se refroidir jusqu'à une température égale ou inférieure à -35°C au moyen d'un cycle fermé de réfrigération afin de condenser partiellement le mélange gazeux formant un gaz enrichi en méthane et appauvri en CO2 par rapport au mélange envoyé au condenseur et un liquide enrichi en CO2 et appauvri en méthane par rapport au mélange envoyé au condenseur, des moyens pour envoyer le liquide enrichi en CO2 en tête de la colonne pour constituer un liquide de reflux et des moyens pour soutirer un liquide contenant au moins 99 % mol, de CO2 en cuve de la colonne comme produit final.

La présente invention propose une méthode pour assurer la qualité du CO2 liquide quelle que soit la composition en CO2, méthane, azote et oxygène en alimentation. Le principe est de bouillir le liquide de fond de colonne grâce à un échangeur qui permet de refroidir la totalité du débit du courant d'alimentation avec un pincement de 2°K et de condenser en tête de colonne un mélange du courant d'alimentation pré-refroidi et du gaz issu de la tête de la colonne de distillation. Quelle que soit la composition en CO2, méthane, azote, et oxygène du courant d'alimentation, son refroidissement de la totalité du débit apporte plus d'énergie que nécessaire pour atteindre la pureté du liquide. Pour maintenir un rendement de liquéfaction du CO2 élevé, le gaz de tête de colonne est également condensé avec le courant d'alimentation. Ce procédé permet de maintenir la qualité du CO2 liquide tout en ayant un bon rendement de l'unité de liquéfaction du CO2.

Le contrôle de la qualité du CO2 liquide est assurée par une colonne de distillation dans le fonctionnement doit comporter:
1/ Le bouillage - apport d'énergie chaude par refroidissement du gaz d'alimentation à une température de préférence supérieure de 2°C par rapport à la température du fond de colonne.
2/ La condensation - apport d'énergie froide d'un mélange de l'alimentation et du gaz de tête de colonne à une température de préférence inférieure d'au moins 4°C de la température de tête de colonne.

L'invention sera décrite de manière plus détaillée en se référant à la figure.

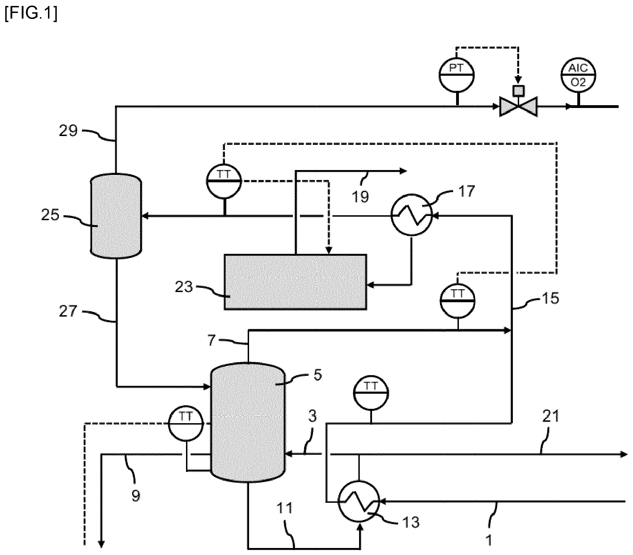

[FIG.1] illustre un procédé selon l'invention de manière schématique.

En amont le gaz brut d'alimentation, par exemple le courant issu de l'unité d'épuration du biogaz, est prétraité en étant par exemple:
1/ comprimé à la pression requise pour la liquéfaction du CO2 et non sa solidification, supérieure à 6 barg et préférentiellement à 15 barg.
2/ séché à 5°C par condensation de l'eau résiduelle. Ce traitement permet également de retirer les vapeurs d'huile issues du procédé de compression.
3/ Purifié afin de retirer les impuretés en faible quantité tels que l'hydrogène sulfuré, les composés organiques volatils ou les vapeurs d'huile. Ce prétraitement est composé de lits de charbons actifs où les impuretés sont définitivement adsorbées.
4/ séché à un point de rosée de -50°C grâce à un procédé d'adsorption de l'eau cyclique.

Il sera compris que ce prétraitement devra être adapté en fonction des pressions et des impuretés du gaz brut d'alimentation.

Dans la [FIG 1], le gaz éventuellement prétraité 1 contient au moins 87 % mol CO2 et entre 5 et 11 % mol de méthane et est séparé pour produire du CO2 liquide 9 épuré en méthane par distillation dans une colonne 5 constituée par une simple colonne équipée de garnissages structurés ou vrac avec un condenseur traitant le gaz de tête mais également le courant d'alimentation. La colonne 5 opère à une pression entre 14 et 16 barg.

Le débit gazeux du mélange 1 à une pression entre 6 barg et 25 barg est envoyé réchauffer le liquide 11 de cuve de la colonne de distillation 5 par échange de chaleur indirect dans un bouilleur 13, qui peut être un échangeur à calandre et à tuyaux. Le bouilleur peut se trouver en cuve de la colonne 5 contrairement à ce qui est montré dans la figure. Le liquide de cuve 11 est, en partie, vaporisé dans le bouilleur 13 et est renvoyé en partie 3 en cuve de la colonne. Le débit gazeux 1 est refroidi dans le bouilleur 13 tout en restant gazeux.

Le débit gazeux refroidi 1 est mélangé avec un gaz de tête 7 provenant de la tête de la colonne 5 pour former un mélange gazeux 15 et le mélange gazeux 15 est refroidi jusqu'à une température égale ou inférieure à -35°C au moyen d'un condenseur 17 distinct de la colonne de distillation 5. Le condenseur est refroidi au moyen d'un cycle fermé de réfrigération 23 où circule un réfrigérant 19 typiquement du CO2 supercritique. Ceci permet de condenser partiellement le mélange gazeux formant dans un séparateur de phases 25 un gaz 29 enrichi en méthane et appauvri en CO2 par rapport au mélange envoyé au condenseur et un liquide 27 enrichi en CO2 et appauvri en méthane par rapport au mélange envoyé au condenseur.

Le liquide 27 enrichi en CO2 est envoyé en tête de la colonne 5 pour constituer un liquide de reflux. Le gaz 29 n'est pas envoyé à la colonne 5 et peut par exemple être réchauffé et recyclé vers l'unité d'épuration du biogaz pour valoriser le méthane résiduel.

Un liquide 9 contenant au moins 99 % mol, de préférence au moins 99,5 %, voire au moins 99,9 % de CO2 est soutiré en cuve de la colonne comme produit final. De préférence ce liquide 9 contient moins que 50ppm de méthane.

Le cycle de réfrigération comprend un compresseur de cycle dont la pression de sortie est régulée en fonction de la température. Il comprend également une vanne de détente dont la température de sortie est régulée en fonction de la température de condensation requise. Cette vanne de détente est située juste en amont du condenseur 17 de sorte que le réfrigérant détendu arrive directement depuis la vanne au condenseur. Le réfrigérant 19 se réchauffe dans le condenseur et est envoyé au compresseur de cycle pour être de nouveau comprimé et être envoyé en cycle à la vanne.

La pression de fonctionnement de la colonne 5 est régulée en fonction de la teneur en oxygène du gaz 29 au moyen d'un analyseur AIC pour éviter des risques d'incendie. Ainsi si la teneur en oxygène dépasse un seuil, la pression d'opération de la colonne 5 sera réduite afin de déconcentrer l'oxygène du courant 29 par une augmentation du CO2 gazeux.

Le fait d'installer le condenseur 17 à l'extérieur de la colonne de distillation 5 permet de mesurer plus précisément la température du gaz en tête de colonne et d'assurer un apport de froid en fonction de l'apport d'énergie chaude au bouilleur 13. En surveillant l'écart de température entre la température du mélange partiellement condensé à la sortie du condenseur 17 et la température du gaz mesurée dans la tête de la colonne 5, il est possible de réguler la vanne de détente du cycle de réfrigérant en fonction de cette différence de température, afin de varier la quantité de frigories apportée par cette détente dans la vanne.

## Revendications

1. Procédé de séparation d'un gaz d'alimentation contenant au moins 87 % mol CO2 et entre 5 et 11 % mol de méthane pour produire du CO2 liquide épuré en méthane par distillation dans une colonne (5) dans lequel :
i. un débit gazeux (1) du gaz d'alimentation à une pression entre 6 barg et 25 barg est envoyé réchauffer le liquide de cuve de la colonne de distillation par échange de chaleur indirect dans un bouilleur (13), le liquide de cuve étant vaporisé (3) dans le bouilleur et envoyé en cuve de la colonne et le débit gazeux étant refroidi tout en restant gazeux
ii. le débit gazeux refroidi est mélangé avec un gaz de tête (7) provenant de la tête de la colonne pour former un mélange gazeux (15) et le mélange gazeux est refroidi jusqu'à une température égale ou inférieure à -35°C au moyen d'un condenseur (17) distinct de la colonne de distillation et refroidi au moyen d'un cycle fermé de réfrigération (19, 23) afin de condenser partiellement le mélange gazeux formant un gaz (29) enrichi en méthane et appauvri en CO2 par rapport au mélange envoyé au condenseur et un liquide (27) enrichi en CO2 et appauvri en méthane par rapport au mélange envoyé au condenseur
iii. le liquide enrichi en CO2 est envoyé en tête de la colonne pour constituer un liquide de reflux et
iv. un liquide (9) contenant au moins 99 % mol, de préférence au moins 99,5 %, voire au moins 99,7 % de CO2 est soutiré en cuve de la colonne comme produit final, de préférence ce liquide contenant moins que 50ppm de méthane.

2. Procédé selon la revendication 1 dans lequel la colonne (5) opère à une pression entre 14 et 16 barg.

3. Procédé selon la revendication 1 ou 2 dans lequel le réfrigérant (19) du cycle fermé est du CO2 à pression supercritique ou du CO2 liquide.

4. Procédé selon une des revendications précédentes dans lequel le mélange gazeux (15) est refroidi jusqu'à une température entre -44°C et -46°C au moyen du condenseur (17).

5. Procédé selon une des revendications précédentes dans lequel le débit gazeux (1) est à une température supérieure de 2°C par rapport à la température du fond de colonne (5).

6. Procédé selon une des revendications précédentes dans lequel le mélange gazeux (15) est refroidi dans le condenseur (17) jusqu'à une température de préférence inférieure d'au moins 4°C à la température de tête de colonne (5).

7. Procédé selon une des revendications précédentes dans lequel le bouilleur (13) est directement intégré en cuve de la colonne.

8. Procédé de séparation de biogaz comprenant une étape d'épuration du biogaz pour séparer du méthane du biogaz en produisant un gaz d'alimentation (1) contenant au moins 87 % mol CO2 et entre 5 et 11 % mol de méthane et dans lequel le gaz d'alimentation est séparé selon une des revendications précédentes.

9. Procédé selon la revendication 8 dans lequel le gaz enrichi en méthane (29) est recyclé à l'étape d'épuration du biogaz pour séparer le méthane qu'il contient

10. Appareil de séparation d'un gaz d'alimentation contenant au moins 87 % mol CO2 et entre 5 et 11 % mol de méthane pour produire du CO2 liquide épuré en méthane par distillation comprenant une colonne de distillation (5) ayant un bouilleur de cuve (13), un condenseur (17) distinct de la colonne de distillation, des moyens pour envoyer un débit gazeux (1) du gaz d'alimentation à une pression entre 6 barg et 25 barg est envoyé réchauffer le liquide de cuve (11) de la colonne de distillation par échange de chaleur indirect dans le bouilleur, le liquide de cuve étant vaporisé dans le bouilleur et envoyé en cuve de la colonne et le débit gazeux étant refroidi tout en restant gazeux, des moyens pour mélanger le débit gazeux refroidi avec un gaz de tête provenant de la tête de la colonne pour former un mélange gazeux, des moyens pour envoyer le mélange gazeux au condenseur pour se refroidir jusqu'à une température égale ou inférieure à -35°C au moyen d'un cycle fermé de réfrigération (19, 23) afin de condenser partiellement le mélange gazeux formant un gaz (29) enrichi en méthane et appauvri en CO2 par rapport au mélange envoyé au condenseur et un liquide enrichi en CO2 et appauvri en méthane (27) par rapport au mélange envoyé au condenseur, des moyens pour envoyer le liquide enrichi en CO2 en tête de la colonne pour constituer un liquide de reflux et des moyens pour soutirer un liquide (9) contenant au moins 99 % mol, de CO2 en cuve de la colonne comme produit final.

## Patentansprüche

1. Verfahren zur Trennung eines Einsatzgases, das mindestens 87 mol-% CO2 und zwischen 5 und 11 mol-% Methan enthält, um durch Destillation in einer Kolonne (5) von Methan gereinigtes flüssiges CO2 zu erzeugen, wobei:
i. ein Gasstrom (1) des Einsatzgases mit einem Druck zwischen 6 barg und 25 barg eingeleitet wird, um die Sumpfflüssigkeit der Destillationskolonne durch indirekten Wärmeaustausch in einem Verdampfer (13) zu erwärmen, wobei die Sumpfflüssigkeit in dem Verdampfer (3) verdampft wird und in den Sumpf der Kolonne geleitet wird und wobei der Gasstrom gekühlt wird und dabei gasförmig bleibt
ii. der gekühlte Gasstrom mit einem Kopfgas (7) gemischt wird, das aus dem Kopf der Kolonne stammt, um ein gasförmiges Gemisch (15) zu bilden, und das gasförmige Gemisch bis auf eine Temperatur von -35 °C oder weniger mittels eines Kondensators (17) gekühlt wird, der von der Destillationskolonne verschieden ist und mittels eines geschlossenen Kühlkreislaufs (19, 23) gekühlt wird, um das gasförmige Gemisch partiell zu kondensieren, wobei ein in Bezug auf das zu dem Kondensator geleitete Gemisch an Methan angereichertes und an CO2 verarmtes Gas (29) und eine in Bezug auf das zum Kondensator geleitete Gemisch an CO2 angereicherte und an Methan verarmte Flüssigkeit (27) gebildet wird
iii. die an CO2 angereicherte Flüssigkeit zum Kopf der Kolonne geleitet wird, um eine Rücklaufflüssigkeit zu bilden, und
iv. eine Flüssigkeit (9), die mindestens 99 mol-%, bevorzugt mindestens 99,5 mol-% oder sogar mindestens 99,7 mol-% CO2 enthält, am Sumpf der Kolonne als Endprodukt abgezogen wird, wobei diese Flüssigkeit bevorzugt weniger als 50 ppm Methan enthält.

2. Verfahren nach Anspruch 1, wobei die Kolonne (5) bei einem Druck zwischen 14 und 16 barg arbeitet.

3. Verfahren nach Anspruch 1 oder 2, wobei das Kältemittel (19) des geschlossenen Kreislaufs CO2 mit superkritischem Druck oder flüssiges CO2 ist.

4. Verfahren nach einem der vorhergehenden Ansprüche, wobei das gasförmige Gemisch (15) bis auf eine Temperatur zwischen -44 °C und -46 °C mittels des Kondensators (17) gekühlt wird.

5. Verfahren nach einem der vorhergehenden Ansprüche, wobei der Gasstrom (1) eine Temperatur aufweist, die um 2 °C über der Temperatur des Bodens der Kolonne (5) liegt.

6. Verfahren nach einem der vorhergehenden Ansprüche, wobei das gasförmige Gemisch (15) in dem Kondensator (17) bis auf eine Temperatur gekühlt wird, die bevorzugt um mindestens 4 °C niedriger als die Temperatur des Kopfes der Kolonne (5) ist.

7. Verfahren nach einem der vorhergehenden Ansprüche, wobei der Verdampfer (13) direkt in den Sumpf der Kolonne integriert ist.

8. Verfahren zur Trennung von Biogas, umfassend einen Schritt des Reinigens des Biogases, um Methan von dem Biogas zu trennen, indem ein Einsatzgas (1) erzeugt wird, das mindestens 87 mol-% CO2 und zwischen 5 und 11 mol-% Methan enthält, und wobei das Einsatzgas nach einem der vorhergehenden Ansprüche getrennt wird.

9. Verfahren nach Anspruch 8, wobei das an Methan angereicherte Gas (29) zu dem Schritt des Reinigens des Biogases zurückgeführt wird, um das Methan, das es enthält, zu trennen

10. Gerät zur Trennung eines Einsatzgases, das mindestens 87 mol-% CO2 und zwischen 5 und 11 mol-% Methan enthält, um durch Destillation von Methan gereinigtes flüssiges CO2 zu erzeugen, umfassend eine Destillationskolonne (5), die einen Sumpfverdampfer (13) besitzt, einen Kondensator (17), der von der Destillationskolonne verschieden ist, Mittel zum Leiten eines Gasstroms (1) des Einsatzgases mit einem Druck zwischen 6 barg und 25 barg eingeleitet wird, um die Sumpfflüssigkeit (11) der Destillationskolonne durch indirekten Wärmeaustausch in dem Verdampfer zu erwärmen, wobei die Sumpfflüssigkeit in dem Verdampfer verdampft wird und in den Sumpf der Kolonne geleitet wird und der Gasstrom gekühlt wird und dabei gasförmig bleibt, Mittel zum Mischen des gekühlten Gasstroms mit einem Kopfgas, das aus dem Kopf der Kolonne stammt, um ein gasförmiges Gemisch zu bilden, Mittel zum Leiten des gasförmigen Gemisches zu dem Kondensator, um bis auf eine Temperatur von -35 °C oder weniger gekühlt zu werden mittels eines geschlossenen Kühlkreislaufs (19, 23), um das gasförmige Gemisch partiell zu kondensieren, wobei ein in Bezug auf das zu dem Kondensator geleitete Gemisch an Methan angereichertes und an CO2 verarmtes Gas (29) und eine in Bezug auf das zum Kondensator geleitete Gemisch an CO2 angereicherte und an Methan verarmte Flüssigkeit (27) gebildet wird, Mittel zum Leiten der an CO2 angereicherten Flüssigkeit zum Kopf der Kolonne, um eine Rücklaufflüssigkeit zu bilden, und Mittel zum Abziehen einer Flüssigkeit (9), die mindestens 99 mol-% CO2 enthält, am Sumpf der Kolonne als Endprodukt.

## Claims

1. Process for the separation of a feed gas containing at least 87 mol% of CO₂ and between 5 mol% and 11 mol% of methane in order to produce liquid CO₂ purified of methane by distillation in a column (5) in which:
i. a gas flow (1) of the feed gas at a pressure between 6 barg and 25 barg is sent to heat the bottom liquid of the distillation column by indirect heat exchange in a boiler (13), the bottom liquid being vaporized (3) in the boiler and sent into the bottom of the column and the gas flow being cooled while remaining gaseous,
ii. the cooled gas flow is mixed with a top gas (7) originating from the top of the column to form a gas mixture (15) and the gas mixture is cooled to a temperature equal to or less than -35°C by means of a condenser (17) separate from the distillation column and cooled by means of a closed refrigeration cycle (19, 23) in order to partially condense the gas mixture, forming a gas (29) enriched in methane and depleted in CO₂, compared to the mixture sent to the condenser, and a liquid (27) enriched in CO₂ and depleted in methane, compared to the mixture sent to the condenser,
iii. the liquid enriched in CO₂ is sent into the top of the column to constitute a reflux liquid and
iv. a liquid (9) containing at least 99 mol%, preferably at least 99.5 mol%, indeed even at least 99.7 mol%, of CO₂ is withdrawn at the bottom of the column as final product, this liquid preferably containing less than 50 ppm of methane.

2. Process according to Claim 1, in which the column (5) operates at a pressure between 14 and 16 barg.

3. Process according to Claim 1 or 2, in which the refrigerant (19) of the closed cycle is CO₂ at supercritical pressure or liquid CO₂.

4. Process according to one of the preceding claims, in which the gas mixture (15) is cooled to a temperature between -44°C and -46°C by means of the condenser (17).

5. Process according to one of the preceding claims, in which the gas flow (1) is at a temperature greater by 2°C with respect to the temperature of the column (5) base.

6. Process according to one of the preceding claims, in which the gas mixture (15) is cooled in the condenser (17) to a temperature preferably lower by at least 4°C than the column (5) top temperature.

7. Process according to one of the preceding claims, in which the boiler (13) is directly incorporated in the bottom of the column.

8. Process for the separation biogas comprising a stage of purification of the biogas in order to separate methane from the biogas, producing a feed gas (1) containing at least 87 mol% of CO₂ and between 5 mol% and 11 mol% of methane and in which the feed gas is separated according to one of the preceding claims.

9. Process according to Claim 8, in which the gas enriched in methane (29) is recycled to the stage of purification of the biogas in order to separate the methane which it contains.

10. Apparatus for the separation of a feed gas containing at least 87 mol% of CO₂ and between 5 mol% and 11 mol% of methane in order to produce liquid CO₂ purified of methane by distillation comprising a distillation column (5) having a bottom boiler (13), a condenser (17) separate from the distillation column, means for sending a gas flow (1) of the feed gas at a pressure between 6 barg and 25 barg is sent to heat the bottom liquid (11) of the distillation column by indirect heat exchange in the boiler, the bottom liquid being vaporized in the boiler and sent into the bottom of the column and the gas flow being cooled while remaining gaseous, means for mixing the cooled gas flow with a top gas originating from the top of the column to form a gas mixture, means for sending the gas mixture to the condenser in order to be cooled to a temperature equal to or less than -35°C by means of a closed refrigeration cycle (19, 23) in order to partially condense the gas mixture, forming a gas (29) enriched in methane and depleted in CO₂, compared to the mixture sent to the condenser, and a liquid enriched in CO₂ and depleted in methane (27), compared to the mixture sent to the condenser, means for sending the liquid enriched in CO₂ into the top of the column to constitute a reflux liquid and means for withdrawing a liquid (9) containing at least 99 mol% of CO₂ at the bottom of the column as final product.
